# EUROPEAN PATENT APPLICATION

(11) **EP 3 312 832 A1**
(43) Date of publication of application: **25.04.2018**
(21) Application number: 16194623.1
(22) Date of filing: 19.10.2016
(51) Int. Cl.: G10L 17/00, G06F 21/32, G10L 15/22

(54) **VOICE CATERGORISATION**

(71) Applicant: Mastercard International Incorporated, New York, NY 10577 (US)
(72) Inventor: HUMPHREYS, Derek, Dublin (IE); ARAUJO, Alonso, Dublin (IE)
(74) Representative: Gill Jennings & Every LLP

(57) **Abstract**

According to a first aspect, there is provided a computer-implemented method of vocally categorising a user, said method comprising: a sound data input receiving a vocalisation by said user; a processor, communicatively coupled to said sound data input, determining a plurality of individual confidence scores by comparing said received vocalisation to vocalisations of a plurality of respective individuals stored in a memory to which said processor is communicatively coupled, each individual confidence score representing a probability that the user is a respective one of said plurality of individuals; wherein each of said stored vocalisations is stored in association with a corresponding category selected from a plurality of categories, and the method further comprises the processor determining, from said plurality of individual confidence scores and respective associated categories, a plurality of category confidence scores, each category confidence score representing a probability that the user belongs to a respective one of said plurality of categories. According to a further aspect, there is provided a system for operating a voice-controlled multi-user device.

## Description

The present disclosure relates to categorisation of voices, for example for the purposes of voice control and/or authentication.

More specifically, aspects relate to a computer-implemented method of vocally categorising a user, a computing system comprising a memory and a sound data input, both in communication with a processor, said memory storing instructions which, when executed by said processor, cause said computing system to perform the method, and a computing system for operating a voice-controlled multi-user device.

Voice control of user devices is becoming more popular as the accuracy of speech recognition software improves. It is now commonly used for control of user devices such as smartphones and smartwatches.

Vocal recognition techniques can be used to identify speakers. In some circumstances this can be used for biometric authentication. However, current techniques require the speaker to make extended vocalisations so that the samples are long enough for matching algorithms to make use of. Typically, a 60 second sample recording might be required initially, with the speaker only being identifiable based on a comparison with this if they speak for around 20 seconds.

According to a first aspect, there is provided a computer-implemented method of vocally categorising a user, said method comprising: a sound data input receiving a vocalisation by said user; a processor, communicatively coupled to said sound data input, determining a plurality of individual confidence scores by comparing said received vocalisation to vocalisations of a plurality of respective individuals stored in a memory to which said processor is communicatively coupled, each individual confidence score representing a probability that the user is a respective one of said plurality of individuals; wherein each of said stored vocalisations is stored in association with a corresponding category selected from a plurality of categories, and the method further comprises the processor determining, from said plurality of individual confidence scores and respective associated categories, a plurality of category confidence scores, each category confidence score representing a probability that the user belongs to a respective one of said plurality of categories.

The method could further comprise the processor determining a categorisation of the user in dependence on the category confidence scores.

Determining said categorisation could comprise selecting the category having the category confidence score representing the highest probability.

The method could further comprise the processor: identifying a command in the received vocalisation; and determining an action to initiate in response to said command, in dependence on said categorisation.

Determining said action to initiate could be further according to an authorisation level stored in said memory in association with the categorisation. Determining the categorisation could comprise: determining whether the category confidence score of said plurality of category confidence scores representing the highest probability differs from the category confidence score of said plurality of category confidence scores representing the second highest probability by more than a predetermined threshold; and if so, selecting the category having the category confidence score representing the highest probability; or if not, selecting the one of the categories having the category confidence score representing the highest and second highest probabilities that corresponds to the lower authorisation level.

Determining the individual confidence scores could further comprise taking into account metadata associated with the respective individuals, stored in said memory.

The received vocalisation and all of the stored vocalisations could each comprise a key phrase.

Said action could comprise waking a device from a power-save mode.

The method could further comprise, prior to said receiving, a microphone, communicatively coupled to the sound data input, recording the stored vocalisations.

Said recording could be repeated periodically, the stored vocalisations being overwritten in said memory in response to each repetition.

Said plurality of categories could be separated according to age and/or gender.

According to a second aspect, there is provided a computing system comprising a memory and a sound data input, both in communication with a processor, said memory storing instructions which, when executed by said processor, cause said computing system to perform the method of any preceding claim.

According to a third aspect, there is provided a computing system for operating a voice-controlled multi-user device, the computing system comprising: a sound data input configured to receive a vocalisation by a user; a memory configured to store vocalisations of a plurality of individuals, each of said plurality of individuals being associated in said memory with a corresponding category selected from a plurality of categories; and a processor, in communication with the memory and the sound data input, the processor being configured to: determine a plurality of individual confidence scores by comparing said received vocalisation to said stored vocalisations of the plurality of respective individuals, each individual confidence score representing a probability that said user is a respective one of the plurality of individuals; and determine, from said plurality of individual confidence scores and respective categories stored in the memory in association with the respective stored vocalisations, a plurality of category confidence scores, each category confidence score representing a probability that the user belongs to a respective one of said plurality of categories.

The voice-controlled multi-user device could have functionality for at least one of: accessing the internet, making electronic transactions, accessing media content and storing food.

Aspects of the present invention will now be described by way of example with reference to the accompanying figures. In the figures:
Figure 1 schematically illustrates an example system in which the ideas disclosed herein could be used;
Figure 2 is a flowchart of an example method; and
Figure 3 schematically illustrates an example system for operating a voice-controlled multi-user device.

The following description is presented to enable any person skilled in the art to make and use the system, and is provided in the context of a particular application. Various modifications to the disclosed embodiments will be readily apparent to those skilled in the art.

Systems and methods will now be described which make use of categorisation for vocal identification and authentication purposes.

For example, a voice control system for a domestic appliance such as a smart fridge might be set up by recording a short sample of each member of the household's voice, and storing this together with an identifier for that person (e.g. their name) and the category they belong to. For example, in a household where Jack and Jill are the parents of three children, the users might be categorised as follows.

| **User** | **Category** |
|---|---|
| Jill | Parent |
| Jack | Parent |
| Tom | Child |
| Harry | Child |
| Sarah | Child |

The initial sample could be vocalisation of a short (e.g. one sentence or less) key phrase (e.g. "wake up fridge"), for example one chosen to include several different sounds in order to obtain as much information about each user's voice in as short a time as possible.

The system could be configured to allow, or even to require, repetition of the key phrase recordings, e.g. on a periodic basis. For example the system could prompt the family to re-record their key phrase once per year to ensure the system remains up to date with changes to their voices as they age. This might require authorisation from the user(s) with the highest access privileges, for example members of the Parent group above. The user(s) with the highest access privileges might be able to manually instigate re-recording and other reconfigurations at any time, for example to add or remove users if the composition of the household changes, or to ensure accuracy is maintained after a male child's voice has broken.

When a voice command is received subsequently, it is compared to the initial sample for each user to produce an individual confidence score that that user is the one issuing the command. For example, if Sarah were to say "I need milk", the confidence scores produced might be as follows.

| **Possible user** | **Individual confidence score** |
|---|---|
| Jill | 0.4 |
| Jack | 0.2 |
| Tom | 0.4 |
| Harry | 0.5 |
| Sarah | 0.6 |

Although all of these scores are quite low, since both the initial sample and the command are of short durations, the mean confidence that a member of the Child group is speaking, i.e. the Child category confidence score, is 0.5, while the Patent category confidence score is only 0.3. The speaker can therefore be categorised as a member of the Child group and optionally given access to functionality set as allowed for all members of the Child group.

Different functionality might be set as allowed for different authorisation levels corresponding to the various groups. For example, members of the Parent group might be permitted to both add items to a shopping list, and place online shopping orders, whereas members of the Child group might only be permitted to add items to the list. More detailed functionality allocations could also be envisaged. For instance certain merchants, product types or individual products could be blacklisted or whitelisted for a particular group; for example members of the Child group might not be permitted to add any items identified as junk food, or as age-restricted (e.g. alcohol or certain ratings of media content), to a shopping list. As another example, members of the Child group might be permitted to place orders only below a certain threshold value.

If the highest category confidence score does not differ significantly from the next highest category confidence score, for example if they differ by less than a threshold value, then the system might be configured to assume that the current user belongs to the group with the lower authorisation level. The user could correct this if necessary by means of a further authorisation process such as a password or biometric-based login.

The system could also store metadata about each user which can be incorporated into the categorisation algorithm. For example characteristics such as gender and age/date of birth could be recorded as part of the setup process.

The user might be required to start each command with the short key phrase used for the initial sample. This increases the accuracy of the voice recognition. It also helps the system to recognise when it is being given a command, so that processing time and power is not wasted on incidental conversation. In this manner the key phrase can act as a wakeup command for the system, e.g. to bring it out of a power save mode.

If a user is miscategorised, they could identify themselves, and authenticate their identity, in some other way in order to gain access to the appropriate level of functionality. For example they could provide a password or personal identification number (PIN) or allow another biometric measurement to be taken (e.g. an iris or fingerprint scan). The system could store a recording of the miscategorised command and add this to the initial sample for that user for use in future comparisons. In this way the system can learn and improve its accuracy over time. If a key phrase is used to start each command as described above, then memory space could be saved by only storing recordings of utterances of the key phrase, instead of all commands received.

The system could be configured to respond to categorisation of users in other ways than providing different levels of access to functionality. For example, the categorisation could be used to inform targeted advertising decisions. E.g. if the system is used for a smart television, it could prevent access to adult-rated media content by children, or prevent children from viewing for more than a predetermined period or after a predetermined time of day, but it could alternatively or additionally present different trailers before playing a film based on the categorisation of the user who requested it be played.

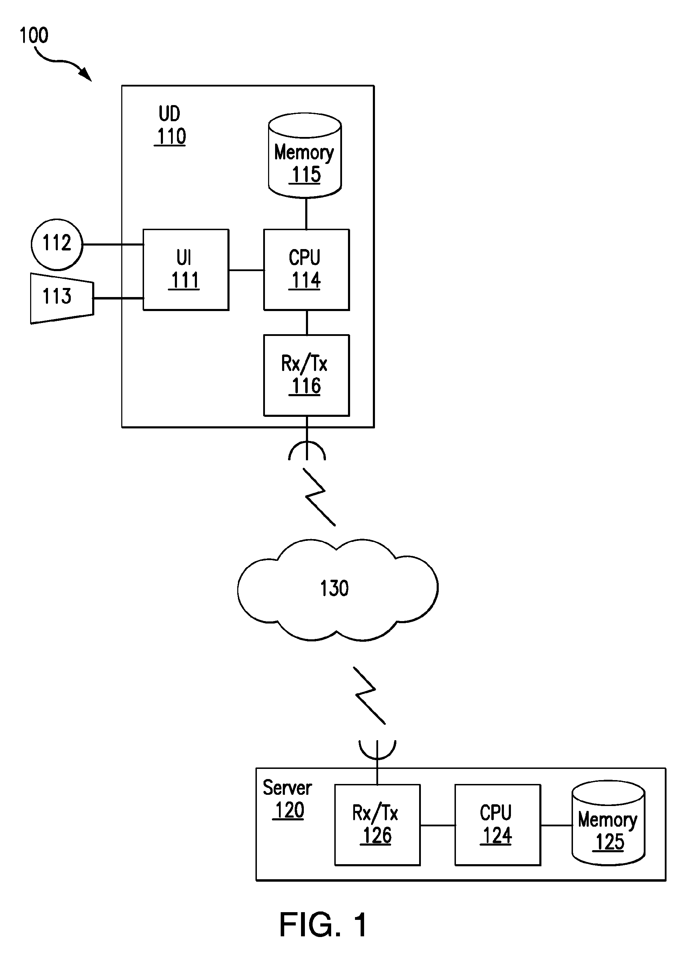

Recording of vocalisations, storage of recordings, processing of received vocalisations and provision of functionality to a user need not be performed by a single device. For example, Figure 1 illustrates a system 100 where these functions are distributed.

In the example system 100 of Figure 1, a user device 110 comprises a user interface module 111 in communication with a microphone 112, at least one user output device 113 such as a screen or speaker, and a processor 114. The processor 114 is in communication with a memory 115 and a user device transceiver 116. The memory 115 stores code configured for execution by the processor 114.

The user device transceiver 116 is configured to communicate (via one or more wired or wireless connections) with the server transceiver 126 of a server 120 over a network 130 (e.g. the internet). The server 120 comprises a processor 124 in communication with the server transceiver 126 and a memory 125. The memory 125 stores code configured for execution by the processor 124. The system 100 and each of its components can include further components and modules; it is illustrated schematically with only those pertinent to the present description.

In the system 100, the initial vocalisations are received by the microphone 112, passed to the processor 114 via the user interface module 111 for packaging for transmission, then transmitted to the server 120 via the network 130 by the user device transceiver 116. At the server 120 the initial vocalisation packets are received by the server transceiver 126 and processed for storage in the memory 125 by the processor 124. Subsequently, this message flow is repeated when a voice command is received, though in this case long-term storage of the vocalisation in the memory 125 is optional. The processor 124 compares the recently received vocalisation to the stored initial vocalisations, determines individual confidence scores and category confidence scores and returns a categorisation to the user device 110 via the server transceiver 126 and the network 130, for the user device 110 to act on. Alternatively, the server 120 could directly control the actions of the user device 110 depending on the categorisation, via the communication link over network 130.

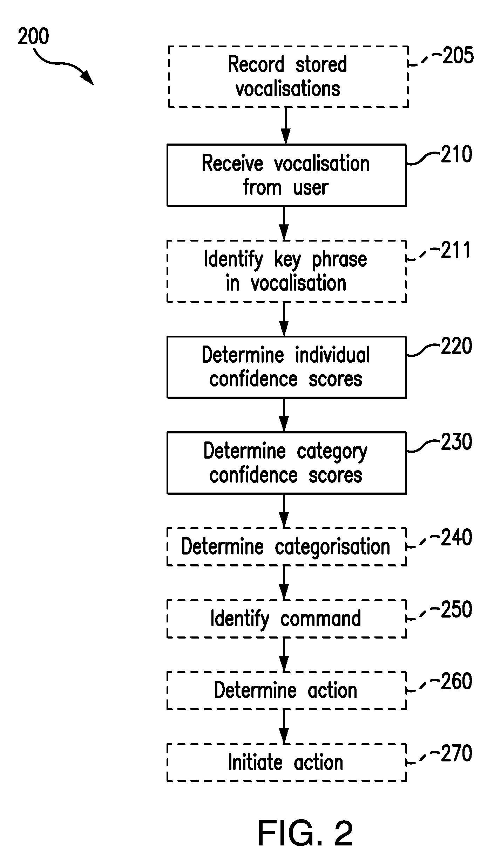

Figure 2 is a flowchart of an example method 200. At 210, a vocalisation is received from a user. At 220, a plurality of individual confidence scores are determined by comparing said received vocalisation to stored vocalisations of a plurality of respective individuals. Each individual confidence score represents a probability that the user is a respective one of said plurality of individuals. Each of said stored vocalisations is associated with a corresponding category selected from a plurality of categories. At 230 it is determined, from said plurality of individual confidence scores and respective associated categories, a plurality of category confidence scores, each category confidence score representing a probability that the user belongs to a respective one of said plurality of categories.

Optionally, at 240 a categorisation of the user is determined. This can comprise selecting the category having the category confidence score representing the highest probability.

Optionally, at 250 a command is identified in the received vocalisation. An action to initiate in response to said command can then be determined at 260, according to said categorisation. Determining said action to initiate can be further according to an authorisation level associated with the categorisation. Determining the categorisation can comprise determining whether the category confidence score of said plurality of category confidence scores representing the highest probability differs from the category confidence score of said plurality of category confidence scores representing the second highest probability by more than a predetermined threshold. If so, the category having the category confidence score representing the highest probability can be selected. If not, the one of the categories having the category confidence scores representing the highest and second highest probabilities that corresponds to the lower authorisation level can be selected.

Optionally, at 270 the determined action is initiated.

Optionally, at 211 a key phrase is identified in the vocalisation.

Optionally, at 205 the stored vocalisations are recorded.

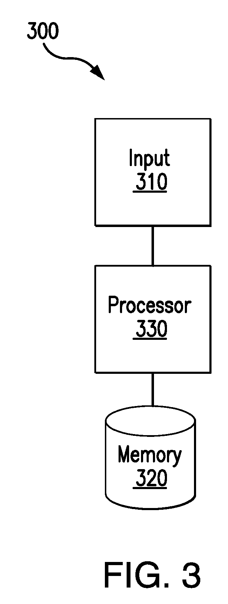

Figure 3 schematically illustrates a system 300 for operating a voice-controlled multi-user device, for example according to the method 200 of Figure 2. The system 300 comprises a sound data input 310 configured to receive a vocalisation by a user. The system 300 further comprises a memory 320 configured to store vocalisations of a plurality of individuals, each of said plurality of individuals being associated in said memory with a corresponding category selected from a plurality of categories. Finally, the system 300 comprises a processor 330, in communication with the memory 320 and the sound data input 310. The processor 330 is configured to determine a plurality of individual confidence scores by comparing said received vocalisation to said stored vocalisations of the plurality of respective individuals, each individual confidence score representing a probability that said user is a respective one of the plurality of individuals. The processor 330 is further configured to determine, from said plurality of individual confidence scores and respective associated categories, a plurality of category confidence scores, each category confidence score representing a probability that the user belongs to a respective one of said plurality of categories.

The present inventors have recognised that for many voice control applications, while a degree of user identification may be required, it is not always necessary to identify users on an individual basis. For example, for control of domestic appliances in a family home or vehicle it may be desirable to permit voice control of different subsets of functions for parents and children, while which parent or child is speaking is unimportant. Similarly, access to age or gender segregated facilities, for example in a school or sporting facility, need not necessarily involve identification of individuals, so long as the person seeking access can be identified as belonging to the appropriate group. Techniques are therefore described herein for voice categorisation, and control and/or authorisation based on such categorisation and the utterance of voice commands and/or key phrases.

These techniques make use of the principal that voice recognition algorithms are generally able to place a higher confidence on a vocalisation having been uttered by an (unidentified) member of a particular category, than on individual identification of the speaker. This means that the initial samples and subsequent vocalisations required can be shorter, without significantly impacting accuracy. Vocal category identification also means that individual logins are not necessarily required, or are not required for access to as many functions, saving the users' time.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Where a processor is referred to herein, this is to be understood to refer to a single processor or multiple processors operably connected to one another. Similarly, where a memory is referred to herein, this is to be understood to refer to a single memory or multiple memories operably connected to one another.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A computer-implemented method of vocally categorising a user, said method comprising:
a sound data input receiving a vocalisation by said user;
a processor, communicatively coupled to said sound data input, determining a plurality of individual confidence scores by comparing said received vocalisation to vocalisations of a plurality of respective individuals stored in a memory to which said processor is communicatively coupled, each individual confidence score representing a probability that the user is a respective one of said plurality of individuals;
wherein each of said stored vocalisations is stored in association with a corresponding category selected from a plurality of categories, and the method further comprises the processor determining, from said plurality of individual confidence scores and respective associated categories, a plurality of category confidence scores, each category confidence score representing a probability that the user belongs to a respective one of said plurality of categories.

2. The method of claim 1, further comprising the processor determining a categorisation of the user in dependence on the category confidence scores.

3. The method of claim 2, wherein determining said categorisation comprises selecting the category having the category confidence score representing the highest probability.

4. The method of either of claims 2 or 3, further comprising the processor:
identifying a command in the received vocalisation; and
determining an action to initiate in response to said command, in dependence on said categorisation.

5. The method of claim 4 as dependent directly on claim 2, wherein:
determining said action to initiate is further according to an authorisation level stored in said memory in association with the categorisation; and
determining the categorisation comprises:
determining whether the category confidence score of said plurality of category confidence scores representing the highest probability differs from the category confidence score of said plurality of category confidence scores representing the second highest probability by more than a predetermined threshold; and
if so, selecting the category having the category confidence score representing the highest probability; or
if not, selecting the one of the categories having the category confidence score representing the highest and second highest probabilities that corresponds to the lower authorisation level.

6. The method of any preceding claim, wherein determining the individual confidence scores further comprises taking into account metadata associated with the respective individuals, stored in said memory.

7. The method of any preceding claim, wherein the received vocalisation and all of the stored vocalisations each comprise a key phrase.

8. The method of claim 4, or any of claims 5 to 7 as dependent thereon, wherein said action comprises waking a device from a power-save mode.

9. The method of any preceding claim, further comprising, prior to said receiving, a microphone, communicatively coupled to the sound data input, recording the stored vocalisations.

10. The method of claim 9, wherein said recording is repeated periodically, the stored vocalisations being overwritten in said memory in response to each repetition.

11. The method of any preceding claim, wherein said plurality of categories are separated according to age and/or gender.

12. A computing system comprising a memory and a sound data input, both in communication with a processor, said memory storing instructions which, when executed by said processor, cause said computing system to perform the method of any preceding claim.

13. A computing system for operating a voice-controlled multi-user device, said computing system comprising:
a sound data input configured to receive a vocalisation by a user;
a memory configured to store vocalisations of a plurality of individuals, each of said plurality of individuals being associated in said memory with a corresponding category selected from a plurality of categories; and
a processor, in communication with the memory and said sound data input, the processor being configured to:
determine a plurality of individual confidence scores by comparing said received vocalisation to said stored vocalisations of the plurality of respective individuals, each individual confidence score representing a probability that said user is a respective one of the plurality of individuals; and
determine, from said plurality of individual confidence scores and respective categories stored in the memory in association with the respective stored vocalisations, a plurality of category confidence scores, each category confidence score representing a probability that the user belongs to a respective one of said plurality of categories.

14. The system of claim 13, wherein the voice-controlled multi-user device has functionality for at least one of: accessing the internet, making electronic transactions, accessing media content and storing food.
